**Europäisches Patentamt**

**European Patent Office**

**Office européen des brevets**

(19)

(11) Veröffentlichungsnummer: **0 116 532**

**A1**

(12) # EUROPÄISCHE PATENTANMELDUNG

(21) Anmeldenummer: **84890004.9**

(22) Anmeldetag: **10.01.84**

(51) Int. Cl.³: **A 01 D 35/264**
**A 01 D 55/18, A 01 D 43/08**

(30) Priorität: **14.01.83 AT 117/83**

(43) Veröffentlichungstag der Anmeldung:
**22.08.84 Patentblatt 84/34**

(84) Benannte Vertragsstaaten:
**CH DE FR GB IT LI**

(71) Anmelder: **Jetzinger, Franz**
**Schindau 31**
**A-3364 Neuhofen a.d. Ybbs(AT)**

(72) Erfinder: **Jetzinger, Franz**
**Schindau 31**
**A-3364 Neuhofen a.d. Ybbs(AT)**

(74) Vertreter: **Hübscher, Gerhard, Dipl.-Ing. et al,**
**Patentanwälte Dipl.-Ing. Gerhard Hübscher Dipl.-Ing.**
**Helmut Hübscher Dipl.-Ing. Heiner Hübscher**
**Spittelwiese 7**
**A-4020 Linz(AT)**

(54) **Mäh- bzw. Häckselmaschine.**

(57) Bei dieser Maschine sind wenigstens zwei quer zur Fahrtrichtung nebeneinander angeordnete vertikalachsige Rotoren (4) vorgesehen, die aus mit Werkzeugen (8,9) besetzten, in einer Ebene liegenden Scheiben bestehen. Die gedachten Umlaufkreise der Werkzeugenden benachbarter Rotoren (4) überschneiden einander in der Vertikalprojektion.

Um eine über die ganze Maschinenbreite gleichmäßige Schnitthöhe und eine gute Zerkleinerungswirkung zu erzielen, ohne formschlüssige Antriebsglieder vorsehen zu müssen, sind an jedem Rotor (4) außer den die sich überschneidenden Umlaufkreise ergebenden längeren Werkzeugen (8; 8a) auch noch kürzere Werkzeuge (9; 9a) angelenkt, die aber in einer anderen Höhe liegen. Die Enden dieser kürzeren Werkzeuge beschreiben einen Kreis, der kanpp an den Umlaufkreis der längeren Werkzeuge (8; 8a) des jeweils benachbarten Rotors (4) heranreicht. Von benachbarten Rotoren (4) sind jeweils die längeren Werkzeuge (8; 8a) des einen Rotors in einer Höhe mit den kürzeren Werkzeugen (9; 9a) des anderen Rotors (4) angeordnet.

EP 0 116 532 A1

./...

FIG.1

(19 025)I/Fa

## Mäh- bzw. Häckselmaschine

Die Erfindung bezieht sich auf eine Mäh- bzw. Häckselmaschine mit wenigstens zwei quer zur Fahrtrichtung nebeneinander angeordneten, vertikalachsigen Rotoren, die aus mit Werkzeugen besetzten, in einer Ebene liegenden Scheiben bestehen, wobei sich die gedachten Umlaufkreise der Werkzeugenden benachbarter Rotoren in der Vertikalprojektion überschneiden.

Bei einer bekannten Mähmaschine dieser Art (DE-OS 31 14 675 bzw. US-PS 2 221 065) sind alle Werkzeuge an den Scheiben, deren Durchmesser gleich groß sind, gleich lang. Um dennoch ohne die Gefahr einer Kollision benachbarter Rotoren eine Überschneidung der Umlaufkreise zu erreichen, sind die Werkzeuge bei dem einen Rotor an der Unterseite und beim jeweils nächsten Rotor an der Oberseite der Scheibe angeordnet. Daraus ergibt sich aber der Nachteil,daß benachbarte Rotoren in verschiedener Höhe schneiden, daß sich also dann im stehenbleibenden Schnittgut Streifen verschiedener Höhe bilden. Dazu kommt noch, daß die Maschine zwar zum Mähen bzw. Schneiden geeignet ist, aber das Schnittgut zu wenig zerkleinert, um auch als Häckselmaschine verwendet werden zu können.

Bei einer anderen bekannten Mähmaschine (US-PS 3 115 741) weisen alle nebeneinander angeordneten Werkzeuge die gleiche Höhe auf. Um ein Zusammenschlagen der in sich übschneidenden Kreisen laufenden Werkzeuge benachbarter Rotoren zu verhindern, müssen die hinsichtlich der Werkzeuge gegeneinander winkelversetzten Rotoren völlig synchron angetrieben werden. Es ist also ein Antrieb mit formschlüssigen Antriebsgliedern, z. B. mit Zahnradwinkelgetrieben, erforderlich, was den technischen Aufwand für die Herstellung und den Betrieb der Maschine beträchtlich erhöht.

Es ist auch schon bekannt alle Werkzeuge gleich lang auszubilden und in einer gemeinsamen Horizontalebene umlaufen zu lassen (US-PS 2 968 354). Um dabei einerseits das Zusammenschlagen der Werkzeuge benachbarter Rotoren zu vermeiden und anderseits zu verhindern, daß zwischen benachbarten Rotoren ungeschnittenes Gut stehenbleibt, ist der mittlere Rotor gegenüber den beiden äußeren Rotoren in Fahrtrichtung versetzt, was selbstverständlich eine Vergrößerung der Maschinenabmessungen in dieser Richtung mit sich bringt und den Aufwand für den Rotorantrieb erhöht. Eine Vergrößerung der Maschinenabmessungen ist immer mit einer ungünstigen Erhöhung des Maschinengewichtes und des Leistungsbedarfes verbunden.

Somit liegt der Erfindung die Aufgabe zugrunde, diese Mängel zu beseitigen und eine Mäh- bzw. Häckselmaschine der eingangs geschilderten Art zu schaffen, die über die gesamte Maschinenbreite mit gleicher Schnitthöhe arbeitet und keine formschlüssigen und daher aufwendigen Antriebsglieder benötigt, wobei eine ausreichende Zerkleinerung des Schnittgutes erreichbar sein soll.

Die Erfindung löst die gestellte Aufgabe dadurch, daß an jedem Rotor außer den mit ihren Enden die sich überschneidenden Umlaufkreise ergebenden längeren Werkzeugen in anderer Höhe kürzere Werkzeuge angelenkt sind, deren Enden einen lediglich bis knapp an den Umlaufkreis der längeren Werkzeuge des benachbarten Rotors heranreichenden Kreis beschreiben, und daß von benachbarten Rotoren jeweils die längeren Werkzeuge des einen in einer Höhe mit den kürzeren Werkzeugen des anderen Rotors, vorzugsweise oberhalb und unterhalb der Scheiben, angeordnet sind.

Es sind also jeweils in einer Ebene längere Werkzeuge des einen Rotors und kürzere Werkzeuge des benachbarten anderen Rotors vorgesehen, so daß in dieser Ebene kein Zusammenschlagen der Werkzeuge benachbarter Rotoren auftreten kann. In einer höheren oder tieferen Ebene liegen dann die kürzeren Werkzeuge des einen Rotors und die längeren Werkzeuge des anderen Rotors, so daß auch hier eine Werkzeugkollision vermieden ist. Diese Werkzeuganordnung von längeren und kürzeren Werkzeugen in der einen Ebene und von kürzeren und längeren Werkzeugen in der anderen Ebene sichert nun einerseits die gewünschte gleichmäßige Schnitthöhe über die ganze Maschinenbreite und vermeidet anderseits ein Stehenbleiben ungeschnittenen Gutes zwischen den benachbarten Rotoren. Da die mit ihren Enden die sich überschneidenden Umlaufkreise ergebenden längeren Werkzeuge benachbarter Rotoren jeweils in verschiedener Höhe umlaufen, ist ein Zusammenschlagen dieser Werkzeuge ausgeschlossen, und es kann daher mit einem einfachen Antrieb, beispielsweise einem Riementrieb, das Auslangen gefunden werden, der außerdem den Vorteil hat, als Rutschkupplung zu wirken, wenn einer der Rotoren aus irgendwelchen Gründen stecken bleibt. Da die Werkzeuge aller Rotoren in zwei Ebenen übereinander arbeiten, ist die gewünschte ausreichende Zerkleinerung des Schnittgutes gewährleistet, so daß die erfindungsgemäße Maschine tatsächlich als Häcksler eingesetzt werden kann.

Sind zur Erhöhung der Schnitt- bzw. Zerkleinerungsleistung im Maschinengehäuse oder am Maschinengestell unbewegliche Gegenwerkzeuge vorgesehen, so werden diese erfindungsgemäß im Zwickelbereich zwischen den Umlaufkreisen der Werkzeuge benachbarter Rotoren in Fahrtrichtung verstellbar befestigt und bestehen zur Anpassung an die zusammenwirkenden längeren und kürzeren Werkzeuge dieser benachbarten Rotoren aus zwei der Höhe nach und quer zur Fahrtrichtung gegeneinander versetzten, schrägflächigen bzw. keilförmigen Teilen.

Schließlich ist es auch möglich, die übereinander angeordneten längeren und kürzeren Werkzeuge jedes Rotors zu gabelförmigen Einheiten zu verbinden, die gegebenenfalls jeweils zwischen dem oberen und unteren Werkzeug ein Werkzeug mittlerer Länge aufweisen, so daß die Zerkleinerungswirkung weiter verbessert wird.

In der Zeichnung ist der Erfindungsgegenstand beispielsweise und zum Teil schematisch dargestellt. Es zeigen

Fig. 1 eine Mäh- bzw. Häckselmaschine in Vorderansicht bei abgenommenen Gegenwerkzeugen,

Fig. 2 die Maschine in Draufsicht,

Fig. 3 ein Maschinendetail mit den Gegenwerkzeugen in Ansicht,

Fig. 4 die Gegenwerkzeuge in Seitenansicht,

Fig. 5 einen Querschnitt durch die Gegenwerkzeuge mit den zugehörigen Rotorwerkzeugen,

Fig. 6 - 9 je zwei benachbarte Rotoren mit verschiedenen Werkzeugvarianten in Ansicht und

Fig. 10 eine Ausführung, bei der die längeren und kürzeren Werkzeuge jedes Rotors zu gabelförmigen Einheiten verbunden sind in den Fig. 6 - 9 entsprechender Darstellungsweise.

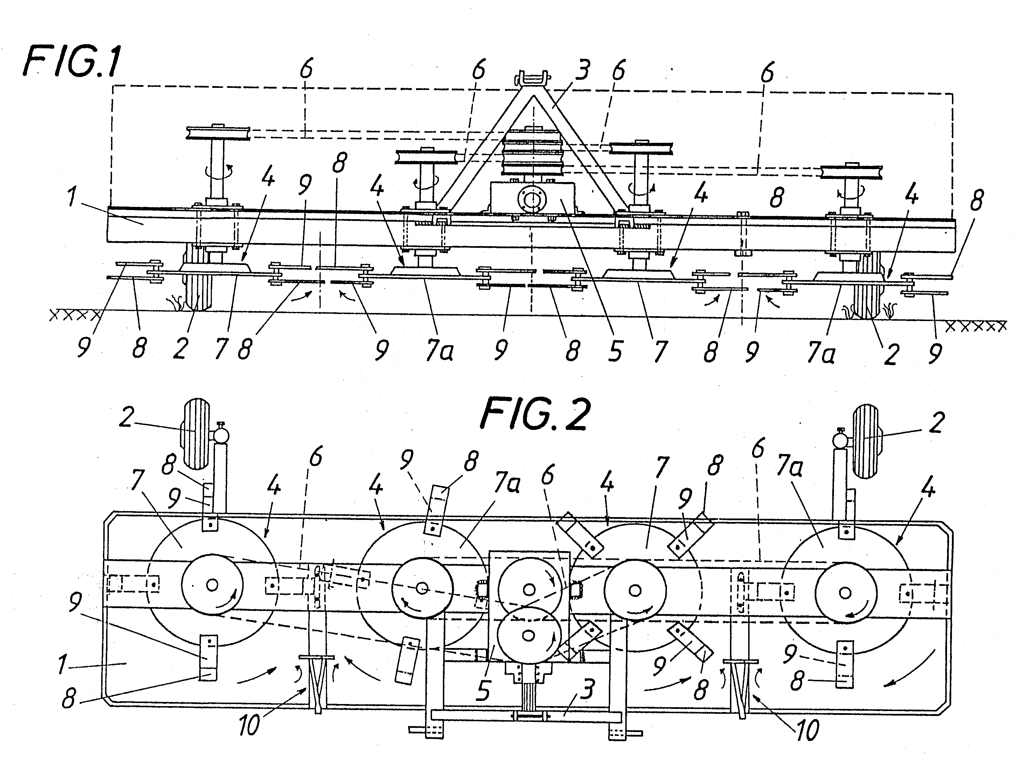

Die erfindungsgemäße Mäh- bzw. Häckselmaschine weist ein Maschinengestell 1 auf, das mit der Höhe nach verstellbaren Stützrädern 2 ausgestattet ist und einen Anbaubock 3 besitzt, mit dem die Maschine beispielsweise an das Dreilenkersystem des Hubwerks eines Ackerschleppers angeschlossen werden kann. Im Maschinengestell 1 sind in einer Reihe nebeneinander vier vertikalachsige Rotoren 4 gelagert, die von der Zapfwelle des Ackerschleppers über ein Winkelgetriebe 5 und Keilriementriebe 6 im Sinne der in Fig. 2 eingetragenen Pfeile angetrieben werden. Die Rotoren 4 tragen in einer Ebene liegende Scheiben 7, 7a, die mit Werkzeugen 8, 9 besetzt sind. Die an den Scheiben 7, 7a angelenkten Werkzeuge 8 sind so lang ausgebildet, daß sich die gedachten Umlaufkreise ihrer Enden in der Vertikalprojektion (Fig. 2) überschneiden. Die Scheiben 7, 7a haben aber außer diesen längeren Werkzeugen 8 noch kürzere Werkzeuge 9 angelenkt, deren Enden einen lediglich bis knapp an den Umlaufkreis der längeren Werkzeuge 8 des benachbarten Rotors heranreichenden Kreis beschreiben. Dabei sind von benachbarten Rotoren jeweils die längeren Werkzeuge 8 des einen Rotors in einer Höhe mit den kürzeren Werkzeugen 9 des anderen Rotors angeordnet. Es liegen also an den Scheiben 7 die längeren Werkzeuge 8 an der Scheibenunterseite und die kürzeren Werkzeuge 9 an der Scheibenoberseite, wogegen die jeweils benachbarten Scheiben 7a die längeren Werkzeuge 8 an der Oberseite und die kürzeren Werkzeuge 9 an ihrer Unterseite tragen.

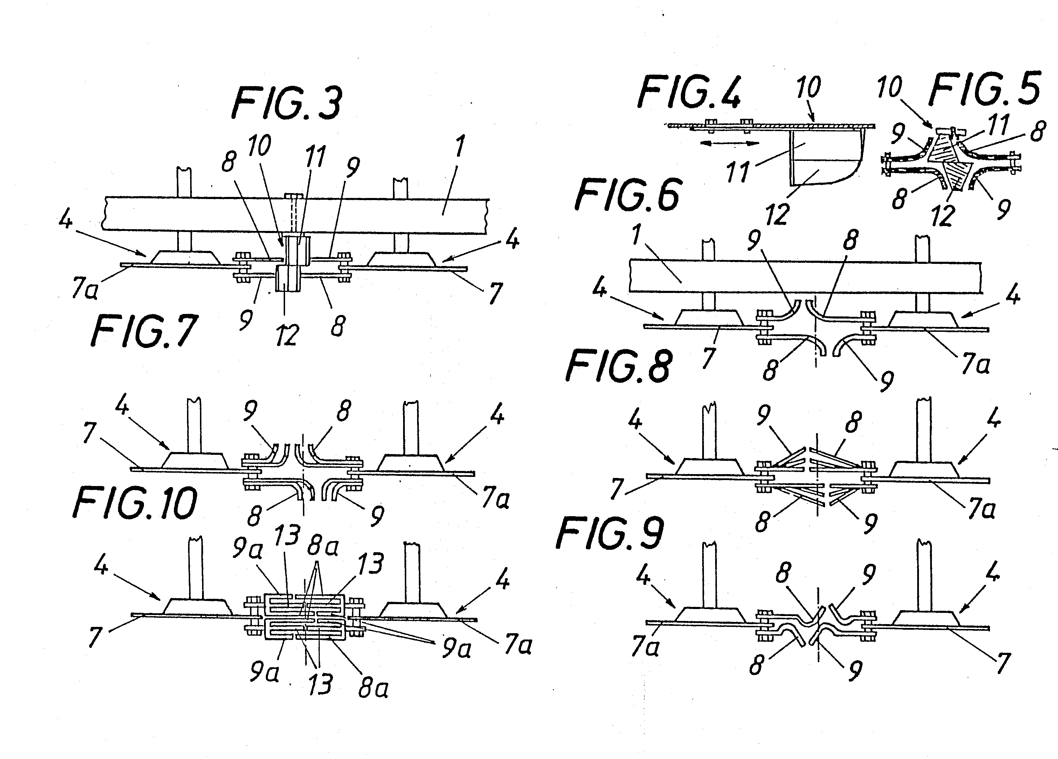

Gemäß den Fig. 3 - 5 sind am Maschinengestell 1 mit Hilfe einer Langlochverbindung feste Gegenwerkzeuge 10 im Zwickelbereich zwischen den Umlaufkreisen der Werkzeuge 8, 9 benachbarter Rotoren 4, 7 bzw. 4, 7a in Fahrtrichtung verstellbar angeordnet. Diese festen Gegenwerkzeuge 10 bestehen aus zwei der Höhe nach und quer zur Fahrtrichtung gegeneinander versetzten schrägflächigen bzw. keilförmigen Teilen 11, 12 .

Die Fig. 6 - 9 zeigen verschiedene Formen der längeren und kürzeren Werkzeuge 8, 9, wobei sich die jeweils gewählte Werkzeugform nach dem gewünschten Zerkleinerungsgrad bzw. nach dem zu mähenden bzw. zu häckselnden Halmgut richtet.

Nach Fig. 10 ist jeweils ein längeres Werkzeug 8a und ein kürzeres Werkzeug 9a gabelförmig zu einer Einheit verbunden, die zwischen dem oberen und unteren Werkzeug 8a, 9a ein Werkzeug 13 mittlerer Länge aufweist. Dabei kann dann jede Scheibe 7, 7a an ihrer Ober- und Unterseite solche Einheiten angelenkt haben.

Patentansprüche:

1. Mäh- bzw. Häckselmaschine mit wenigstens zwei quer zur Fahrtrichtung nebeneinander angeordneten, vertikalachsigen Rotoren (4), die aus mit Werkzeugen (8, 9) besetzten, in einer Ebene liegenden Scheiben (7, 7a) bestehen, wobei sich die gedachten Umlaufkreise der Werkzeugenden benachbarter Rotoren (4) in der Vertikalprojektion überschneiden, dadurch gekennzeichnet, daß an jedem Rotor (4) außer den mit ihren Enden die sich überschneidenden Umlaufkreise ergebenden längeren Werkzeugen (8; 8a) in anderer Höhe kürzere Werkzeuge (9; 9a) angelenkt sind, deren Enden einen lediglich bis knapp an den Umlaufkreis der längeren Werkzeuge (8; 8a) des benachbarten Rotors (4) heranreichenden Kreis beschreiben, und daß von benachbarten Rotoren (4) jeweils die längeren Werkzeuge (8; 8a) des einen in einer Höhe mit den kürzeren Werkzeugen (9; 9a) des anderen Rotors (4), vorzugsweise oberhalb und unterhalb der Scheiben (7, 7a), angeordnet sind.

2. Maschine nach Anspruch 1 mit im Maschinengehäuse oder am Maschinengestell (1) vorgesehenen unbeweglichen Gegenwerkzeugen (10), dadurch gekennzeichnet, daß die Gegenwerkzeuge (10) im Zwickelbereich zwischen den Umlaufkreisen der Werkzeuge (8, 9) benachbarter Rotoren (4) in Fahrtrichtung verstellbar befestigt sind und zur Anpassung an die zusammenwirkenden längeren und kürzeren Werkzeuge (8, 9) dieser benachbarten Rotoren (4) aus zwei der Höhe nach und quer zur Fahrtrichtung gegeneinander versetzten, schrägflächigen bzw. keilförmigen Teilen (10, 11) bestehen.

3. Maschine nach Anspruch 1, dadurch gekennzeichnet, daß die übereinander angeordneten längeren und kürzeren Werkzeuge (8a, 9a) jedes Rotors (4) zu gabelförmigen Einheiten verbunden sind, die gegebenenfalls jeweils zwischen dem oberen und unteren Werkzeug (8a, 9a) ein Werkzeug (13) mittlerer Länge aufweisen.

FIG.1

FIG.2

FIG.5

FIG.4

FIG.6

FIG.8

FIG.9

FIG.3

FIG.7

FIG.10

# Europäisches Patentamt

## EUROPÄISCHER RECHERCHENBERICHT

| | EINSCHLÄGIGE DOKUMENTE | | EP 84890004.9 |
|---|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | GB - A - 1 469 342 (C. VAN DER LELY N.V.)<br>* Fig. 3,4,6,8,9 *<br>-- | 1,2 | A 01 D 35/264<br>A 01 D 55/18<br>A 01 D 43/08 |
| A | GB - A - 2 083 736 (JOHN MURPHY)<br>* Fig. 1-5 *<br>-- | 1 | |
| A | US - A - 3 028 919 (A. SMITH)<br>* Fig. 9 *<br>-- | 1 | |
| D,A | US - A - 2 968 354 (T.H. BERRY)<br>* Fig. 1,2,6 *<br>-- | 1-3 | |
| D,A | DE - A1 - 3 114 675 (MATHEWS)<br>* Fig. 1 *<br>-- | 1 | RECHERCHIERTE SACHGEBIETE (Int. Cl. ³) |
| D,A | US - A - 3 115 741 (H.A. ROBINSON)<br>* Fig. 6,7,10,11 *<br>---- | 1 | A 01 D 35/00<br>A 01 D 43/00<br>A 01 D 55/00 |

Der vorliegende Recherchenbericht wurde für alle Patentansprüche erstellt.

| Recherchenort | Abschlußdatum der Recherche | Prüfer |
|---|---|---|
| WIEN | 05-04-1984 | LANGER |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

\& : Mitglied der gleichen Patentfamilie, übereinstimmendes Dokument

EPA Form 1503. 03.82